# DEMANDE DE BREVET EUROPEEN

(11) **EP 2 295 893 A1**
(43) Date de publication de la demande: **16.03.2011**
(21) Numéro de dépôt: 10157015.8
(22) Date de dépôt: 19.03.2010
(51) Int. Cl.: F24J 2/46, F24J 2/52

(54) **Système modulaire de fixation de panneaux solaires à une toiture comprenant des moyens pour canaliser de l'eau**

(30) Priorité: 01.04.2009 ES 200930027
(71) Demandeur: Producciones Mitjavila, S.A., 17730 Llers (ES)
(72) Inventeur: Mitjavila, Raymond, 66600 Rivesaltes (FR)
(74) Mandataire: Ponti Sales, Adelaida

(57) **Abrégé**

Système modulaire de fixation de panneaux solaires (2) à une toiture (2), qui comprend des premiers profils (3) et des seconds profils (4) perpendiculaires et au niveau de l'union entre deux panneaux contigus dans la direction de la pente maximale, ces premiers profils (3) comprenant des languettes d'appui (3a,3b) de deux panneaux solaires contigus dans la direction horizontale et deux canaux (3c,3d) disposés de manière à configurer des sorties d'eau, les seconds profils (4) étant pourvus de canaux (4a,4b) pour conduire l'eau jusqu'aux sorties d'eau (3c,3d), et ces canaux constituant eux-mêmes des bords d'appui (4c,4d) pour les panneaux sur lesquels s'appuient les seconds profils (4), faisant butoir contre les languettes (3a,3b) et comprenant une extension (4e) qui s'étend entre deux panneaux solaires (2) contigus et où les bords des canaux (4a,4b) des seconds profils (4) se trouvent à la même hauteur que les languettes (3a,3b), de sorte que ces seconds profils remplissent simultanément les fonctions de séparation, de positionnement relatif entre profils contigus et de canalisation de l'eau.

## Description

L'invention qui va être présentée porte sur un système modulaire de fixation de panneaux solaires à une toiture, muni de dispositifs pour canaliser l'eau, d'un montage facile, rapide et précis, et qui garantit de bonnes conditions d'étanchéité.

### ANTÉCÉDENTS DE L'INVENTION

On connaît les systèmes modulaires de fixation de panneaux solaires à une toiture, munis de dispositifs pour canaliser l'eau et qui comprennent fondamentalement deux types de profils:
- les premiers sont destinés à être disposés dans la direction de la pente maximale de la toiture.
- les seconds sont perpendiculaires aux premiers et disposés au niveau de l'union entre deux panneaux contigus, dans la direction de la pente maximale de la toiture.

En général, les premiers profils se fixent à la toiture au moyen de troisièmes profils, dont la disposition est horizontale, comme les courroies de la structure.

Dans les solutions les plus semblables à celle que nous propose cette invention, les premiers profils comprennent chacun, à mi-hauteur et de chaque côté, les languettes d'appui de deux panneaux solaires contigus dans la direction horizontale et deux canaux disposés de manière à configurer des sorties d'eau situées sous les languettes d'appui. En général, ces languettes d'appui comprennent des joints qui embrassent toute la longueur du profil et se situent, quand le système est monté, en contact avec les panneaux solaires. L'une des missions des canaux disposés sous ces languettes est de recueillir l'eau qui pourrait passer à travers ces joints.

De même, dans ces solutions, les seconds profils sont pourvus de canaux pour conduire l'eau jusqu'aux sorties d'eau des premiers profils, de sorte que la trajectoire de l'eau qui s'écoule à travers les espaces qui pourraient subsister entre les panneaux solaires contigus dans la direction de la pente maximale est en premier lieu horizontale, jusqu'à ce que cette eau vienne s'écouler dans les canaux d'écoulement des premiers profils, où elle est canalisée dans la direction de la pente maximale pour finir par être recueillie dans les canaux d'écoulement situés dans les arêtes basses des pentes de la toiture.

De plus, les bords des canaux des seconds profils constituent les bords d'appui horizontaux des panneaux, de manière que les seconds profils remplissent la double fonction de canalisation horizontale de l'eau et d'appui. En général, ces seconds profils sont vissés ou soudés aux premiers profils.

Cependant, la solution décrite présente les divers inconvénients qui suivent:
- Son application, lorsqu'une étanchéité parfaite est requise, est limitée, parce qu'elle ne garantit pas une union parfaite, ou un scellage global parfait, spécialement au niveau de panneaux contigus dans la direction de la pente maximale.
- Elle nécessite des unions vissées ou soudées, avec les problèmes d'étanchéité et de montage que ces dernières peuvent respectivement occasionner.
- Et le plus important est que le positionnement des différentes composantes doit être réalisé en prenant des mesures pour que les différentes parties s'emboîtent.

Dans ce sens, la solution de l'état de la technique décrite n'est pas auto-calibrable, et, au cours du processus de montage, on doit veiller très scrupuleusement à poser correctement les différents profils afin de recevoir les suivants.

Face à ces limitations, la demanderesse propose l'invention décrite à la suite.

### DESCRIPTION DE L'INVENTION

Cette invention a trait à un système modulaire de fixation de panneaux solaires à une toiture, muni de dispositifs pour canaliser l'eau, qui comprend:
- des premiers profils destinés à être disposés dans la direction de la pente maximale de la toiture,
- des seconds profils perpendiculaires aux premiers et disposés au niveau de l'union entre deux panneaux contigus dans la direction de la pente maximale de la toiture,
- les premiers profils comportant à mi-hauteur et de chaque côté les languettes d'appui de deux panneaux solaires contigus dans la direction horizontale et deux canaux disposés de manière à configurer les sorties d'eau correspondantes disposées sous ces languettes,
- les seconds profils étant pourvus de canaux pour conduire l'eau jusqu'aux sorties d'eau, et les bords de ces canaux des seconds profils constituant eux-mêmes les bords d'appui des panneaux,

ce qui a pour caractéristique que les seconds profils s'appuient sur les bords des sorties d'eau, font de butée contre les languettes en question et comprennent une extension qui s'étend entre deux panneaux solaires contigus, et, du fait que les bords des canaux des seconds profils restent à la même hauteur que les languettes, les seconds profils réalisent simultanément les fonctions de séparation entre les premiers profils, de positionnement relatif entre les profils contigus et de canalisation de l'eau jusqu'aux sorties d'eau.

Selon d'autres caractéristiques de l'invention indiquées dans les revendications dépendantes:
- les premiers profils destinés à être disposés dans la direction de la pente maximale s'étendent, pour leur partie supérieure, une fois montés, au moyen de deux languettes substanciellement verticales quand le système est monté.
- le système comprend des troisièmes profils destinés à être fixés à ces deux languettes au moyen d'un corps central pourvu de deux languettes substantiellement verticales, et à presser des panneaux contre les deux languettes d'appui correspondantes au moyen d'un patin, de la médiane duquel partent ces deux languettes.
- le système comprend des quatrièmes profils disposés perpendiculairement au-dessous de premiers profils et pourvus de moyens de fixation aux éléments structuraux de la toiture.
- le système comprend des moyens de fixation des premiers profils à ces quatrièmes profils.
- les moyens de fixation des premiers profils aux quatrièmes profils comprennent:
   1 les coulisses correspondantes disposées dans les premiers profils et les quatrièmes profils respectivement,
   2 des pièces d'union pourvues de moyens pour glisser par ces coulisses et
   3 des moyens de blocage de ces pièces d'union dans les coulisses respectives.
- la coulisse des quatrièmes profils comprend un canal de glissement et deux bords de rétention qui configurent une rainure de glissement d'une largeur inférieure à la plus grande largeur de la coulisse.
- les moyens pour glisser par ces coulisses consistent en une languette de rétention de forme substantiellement complémentaire aux coulisses des premiers profils, en un élément de rétention destiné à glisser dans les coulisses des quatrièmes profils, et en une vis d'union entre cet élément de rétention et la pièce d'union.
- les moyens de blocage des pièces d'union dans ces coulisses consistent en la vis mentionnée ci-dessus.
- le système comprend des joints d'étanchéité longitudinaux disposés à proximité des bords des languettes d'appui de deux panneaux solaires et sur les bords des sorties d'eau des premiers profils.
- l'extension des premiers profils, mentionnée plus haut, est constituée de deux languettes substantiellement parallèles.
- le système comprend des cinquièmes profils destinés à être fixés aux deux languettes des seconds profils au moyen d'un corps central pourvu de deux languettes substantiellement verticales, et à presser sur les panneaux contre les languettes d'appui correspondantes au moyen d'un patin de la médiane duquel partent ces deux languettes.
- le patin des cinquièmes profils est plié, de sorte que la moitié du patin située en aval, une fois monté, constitue une ouverture pour permettre la circulation de l'air entre l'espace situé sous les panneaux et l'extérieur.
- les quatrièmes profils comprennent, au fond du canal de glissement mentionné plus haut, des languettes longitudinales destinées à servir d'ancrage pour la vis d'union.
- le système comprend des sixièmes profils destinés à être fixés aux deux languettes des premiers profils situés dans les arêtes supérieure et inférieure du toit, ces sixièmes profils étant pourvus d'un corps central muni de deux languettes substantiellement verticales, et à presser aux panneaux extrêmes contre les languettes d'appui au moyen d'un patin de la médiane duquel partent les deux languettes, ce patin comprenant une jupe qui s'étend du côté sans panneau, de sorte qu'il constitue la finition des extrémités latérales gauche et droite de la toiture de panneaux solaires.

### BRÈVE DESCRIPTION DES DESSINS

Pour une meilleure compréhension de ce qui a été exposé sont joints des dessins dans lesquels, schématiquement et seulement à titre d'exemple non limitatif, est représenté un cas pratique de réalisation du système de fixation de panneaux solaires de cette invention.

La figure 1 est une section dans laquelle on apprécie la configuration du premier profil et sa position relativement au panneau solaire, au second profil, au troisième profil et au quatrième profil.

La figure 2 est une vue en élévation dans laquelle on apprécie la disposition du second profil entre deux premiers profils, concrètement la coïncidence entre le niveau des canaux des canaux du second profil et celui des languettes des premiers profils. Sur cette figure, on ne représente pas de panneau.

La figure 3 est une vue en perspective du second profil, dans laquelle on apprécie les canaux, l'extension centrale qui pointe vers le haut une fois le système monté et qui sert de séparation entre les panneaux contigus et de positionnement des seconds profils.

La figure 4 est une vue en perspective dans laquelle on apprécie la disposition relative des premiers, seconds et quatrièmes profils.

La figure 5 est une vue en perspective similaire à celle de la figure 4, mais dans laquelle on apprécie les profils spécifiques latéraux qui servent à canaliser l'eau aux extrémités, ainsi que les troisièmes profils de pression des panneaux solaires.

La figure 6 est une vue en section dans laquelle on apprécie un sixième type de profil destiné à couvrir, à protéger et à enjoliver les profils des extrémités.

La figure 7 est une vue en section dans laquelle on apprécie deux panneaux solaires contigus dans la direction de la pente maximale, et la forme spécifique des seconds profils qui permet la ventilation de la zone située sous les panneaux.

La figure 8 est une vue en section des quatrièmes profils, dont la fonction est de fixer les premiers profils à la structure préexistante de la toiture.

La figure 9 est une section d'une réalisation préférée des premiers profils, pourvus de coulisses d'emboîtement de toiles protectrices soutenues par des profils adjacents.

### DESCRIPTION D'UNE RÉALISATION PRÉFÉRÉE

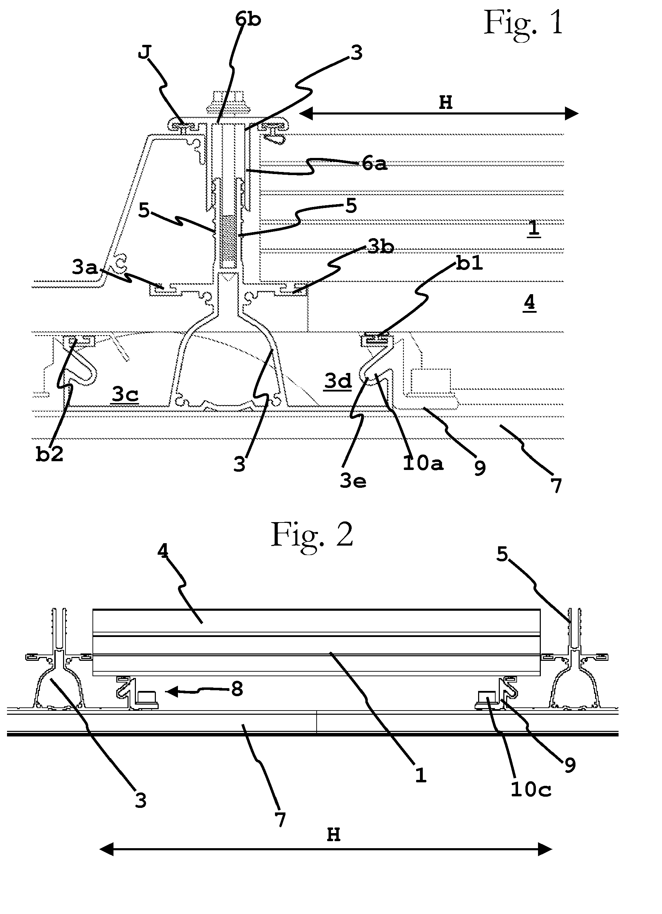

Comme on le voit sur les figures 1 à 4, l'invention a trait à un système modulaire de fixation de panneaux solaires [1] à une toiture [2], pourvu de dispositifs pour canaliser l'eau, ce qui comprend:
- des premiers profils [3] destinés à être disposés dans la direction de la pente maximale [L] de la toiture [2],
- et des seconds profils [4] perpendiculaires aux premiers et disposés au niveau de l'union entre deux panneaux contigus dans la direction de la pente maximale de la toiture,
- les premiers profils [3] comprenant, à mi-hauteur et de chaque côté, les languettes [3a] et [3b] d'appui de deux panneaux solaires [1] contigus dans la direction horizontale et deux canaux [3c] et [3d] disposés de telle sorte qu'ils configurent des sorties d'eau situées sous ces languettes [3a] et [3d],
- les seconds profils [4] étant pourvus de canaux [4a] et [4b] pour conduire l'eau jusqu'aux sorties d'eau [3c] et [3d] et les bords de ces canaux des seconds profils [4] constituant les bords d'appui correspondants [4c] et [4d] des panneaux [1].

Ces caractéristiques, déjà connues, configurent un ensemble de cadres d'appui des panneaux capable de canaliser l'eau jusqu'aux bords de la toiture.

Concrètement, dans l'invention présente, les seconds profils [4] s'appuient sur les bords des sorties d'eau [3c] et [3d], font de butée contre les languettes [3a] et [3b], ci-dessus mentionnées et comprennent une extension [4e], de préférence constituée de deux languettes [4f] et [4g], substantiellement parallèles, qui s'étend entre deux panneaux solaires [2] contigus et les bords des canaux [4a] et [4b] des seconds profils [4] se trouvent à la même hauteur que les languettes [3a] et [3b].

Ces caractéristiques permettent aux seconds profils de remplir, outre la fonction de canalisation de l'eau jusqu'aux sorties d'eau, les fonctions de:
- séparation entre premiers profils
- positionnement relatif entre profils contigus.

Ces deux fonctions sont essentielles pour pouvoir réaliser un montage commode et précis du système, étant donné qu'il n'est pas nécessaire de prendre des mesures pour obtenir les positions relatives des éléments, puisque les profils eux-mêmes, en combinaison avec le panneau, permettent d'obtenir avec précision ces positionnements.

Selon une réalisation préférée, les premiers profils destinés à être disposés dans la direction de la pente maximale s'étendent, pour leur partie supérieure après montage, au moyen de deux languettes [5] substantiellement verticales quand le système est monté. Comme il a été mentionné, ces languettes servent à presser les panneaux solaires contre le cadre formé par les languettes des premiers profils et les bords des canaux des seconds profils, qui définissent un plan d'appui des panneaux.

Ces languettes coopèrent avec des troisièmes profils [6] destinés à être fixés aux deux languettes [5] au moyen d'un corps central pourvu de deux languettes substantiellement verticales [6a], et à presser aux panneaux contre les languettes d'appui [3a] et [3b] au moyen d'un patin de la médiane duquel partent les deux languettes [5]. La fixation se fait par insertion d'une vis qui, en pénétrant dans le plan médian des deux profils, presse vers le dehors les deux languettes [5] pour qu'elles s'appuient contre les languettes [6a] des profils [6]. L'emboîtement des deux ensembles de languettes est ajustable en hauteur, pour s'adapter à de différentes hauteurs de panneau, qui peuvent aller de 1 cm pour les panneaux sans cadre ou bien jusqu'à 3 à 5 cm pour les panneaux avec cadre.

Pour fixer les premiers profils à la structure de la toiture, le système de l'invention prévoit des quatrièmes profils [7] disposés perpendiculairement au-dessous des premiers profils [3] et pourvus de moyens de fixation à des éléments structuraux de la toiture [2]. Ces éléments de fixation peuvent être vissés soit avec des brides, soit avec des éléments en "U".

Dans le processus de montage du système, les quatrièmes profils sont les premiers à être montés, horizontaux, c'est à dire perpendiculaires aux courroies de la structure de la toiture, si elle en est munie.

Ensuite, on fixe les premiers panneaux aux quatrièmes profils et simultanément on monte les seconds profils et les panneaux, qui établissent progressivement les distances entre les différents profils.

Pour fixer ces quatrièmes profils aux premiers profils, le système prévoit des moyens de fixation [8] qui comprennent:
- les coulisses [3e] et [7e] correspondantes, disposées dans les premiers profils [3] et les quatrièmes profils respectivement,
- des pièces d'union [9] pourvues de moyens [10] pour glisser dans les coulisses [3e] et [7e] correspondantes,
- des moyens de blocage [11] des pièces d'union [9] dans les coulisses [3e] et [7e] indiquées ci-dessus.

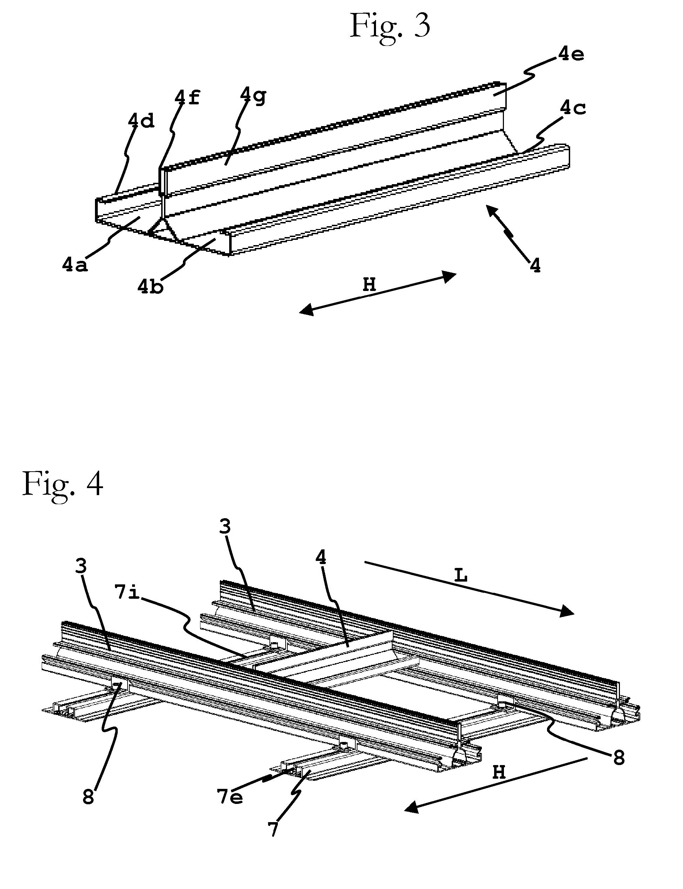

Ce système de coulisses, comme on peut l'apprécier dans la figure 4, permet d'ajuster la position relative des premiers et des quatrièmes profils dans les directions L et H.

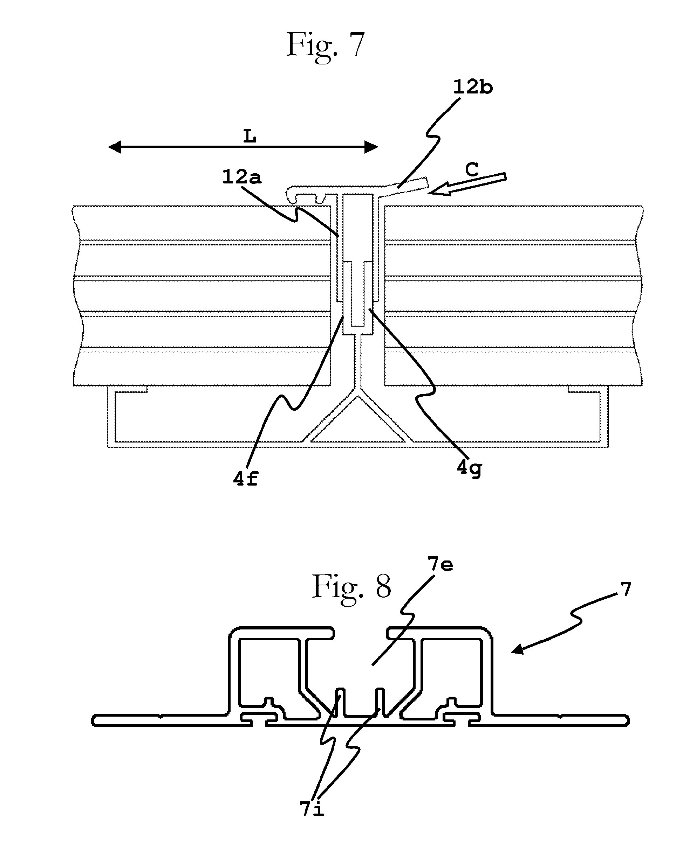

Comme on le voit dans la figure 8, la coulisse [7e] des quatrièmes profils [7] comprend un canal de glissement [7f] et deux bords de y retention [7g] qui configurent une rainure de glissement [7i] d'une largeur inférieure à la plus grande largeur de la coulisse [7e].

Ainsi qu'on l'apprécie en détail dans la figure 1, les moyens [10] pour glisser dans les coulisses [3e] et [7e] consistent en une languette de rétention [10a] de forme substantiellement complémentaire aux coulisses [3e] des premiers profils [3], en un élément de rétention [10b] destiné à glisser dans les coulisses [7e] des quatrièmes profils [7], et en une vis [10c] d'union entre le l'élément de rétention [10b] et la pièce d'union [9], de manière que, une fois décidée la position relative adéquate, on visse la vis [10c] jusqu'à bloquer entre eux les premiers et les quatrièmes profils, tout cela sans la nécessité de faire des perforations dans les profils, ce qui pourrait entraîner des risques de filtrations.

L'étanchéité du système peut être améliorée en le pourvoyant de joints d'étanchéité longitudinaux [J], dont on apprécie la section sur la figure 1, disposés à proximité des bords des languettes d'appui [3a] et [3b] des deux panneaux solaires [1] et sur les bords des sorties d'eau [3c] et [3d] des premiers profils [3].

De même, le système comprend des cinquièmes profils [12] destinés à être fixés aux deux languettes [4f] et [4g] des seconds profils au moyen d'un corps central pourvu de deux languettes [12a] substantiellement verticales, et à presser aux panneaux contre les languettes d'appui [4f] et [4g] au moyen d'un patin de la médiane duquel partent deux languettes [12a]. C'est à dire qu'ils ont la même fonction que les troisièmes profils et qu'ils sont configurés de la même manière.

Selon une autre réalisation préférée de l'invention, ainsi qu'on peut l'apprécier sur la figure 7, le patin des cinquièmes profils est plié, de sorte que la moitié du patin située en aval après le montage constitue une ouverture pour la circulation de l'air entre l'espace situé sous les panneaux et l'extérieur, facilitant ainsi la réfrigération postérieure des panneaux solaires.

Comme on l'apprécie sur la figure 8, les quatrièmes profils [7] comprennent au fond du canal [7f] des languettes longitudinales [7i] destinées à servir d'ancrage à l'extrémité de la vis d'union [10c].

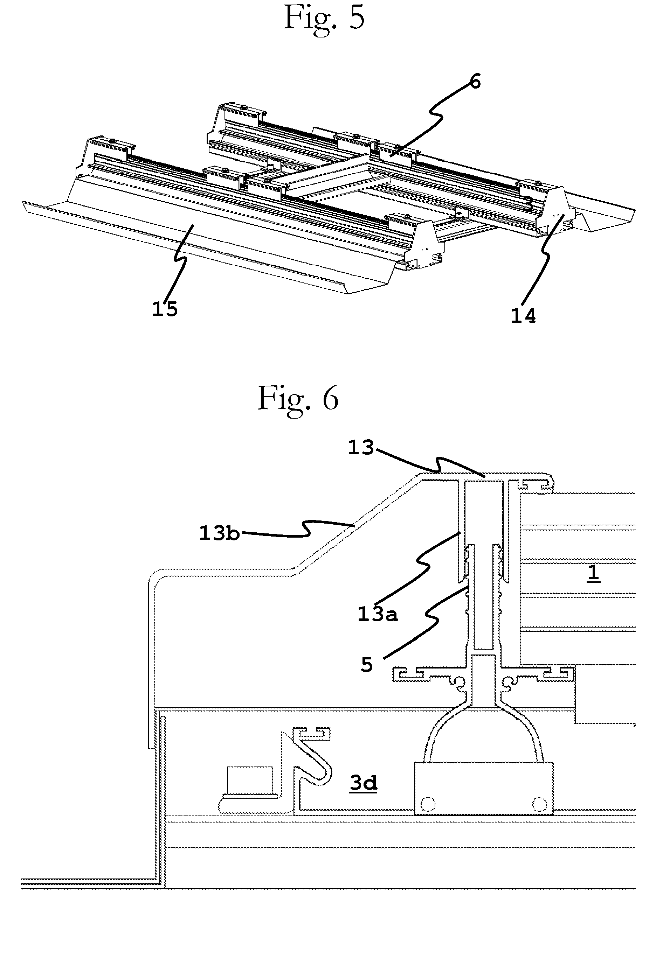

Comme on le voit dans la figure 6, le système de l'invention comprend des sixièmes profils [13] destinés à être fixés aux deux languettes [5] des premiers profils situés dans les arêtes latérales droite et gauche de la toiture, ces sixièmes profils étant pourvus d'un corps central muni de deux languettes [13a] substantiellement verticales, et à presser aux panneaux extrêmes contre les languettes d'appui [3a] et [3b] au moyen d'un patin de la médiane duquel partent ces deux languettes [13a], ce patin comprenant une jupe [13b] qui s'étend du côté sans panneau, de sorte qu'il constitue la finition des extrémités latérales droite et gauche de la couverture de panneaux solaires. Cette jupe sert d'enjoliveur des côtés extrêmes du montage.

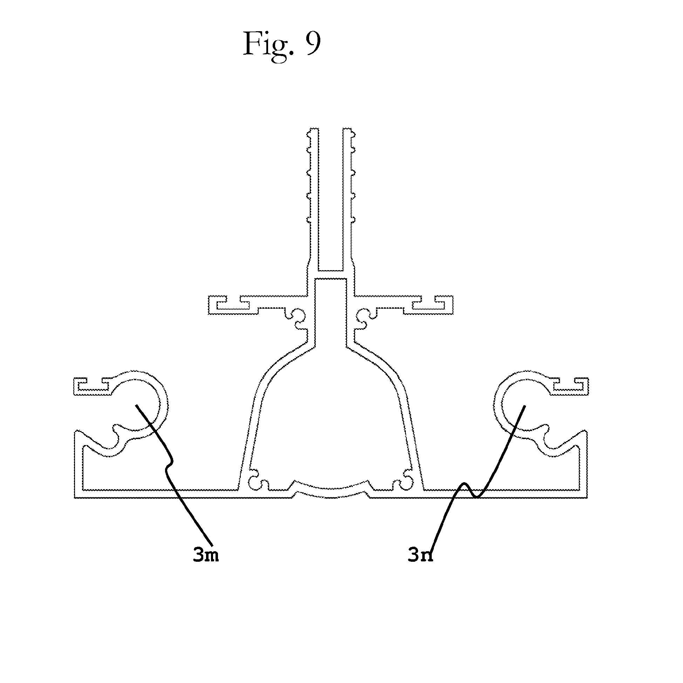

Pareillement, comme on le voit sur la figure 9, les coulisses [3e] des premiers profils [3] s'étendent au moyen des coulisses [3m] et [3n] de section cylindrique de préférence, qui permettent d'emboîter et de maintenir des extrémités complémentaires de toiles de couverture disposées sous les panneaux. Ces toiles peuvent servir d'enjoliveurs, au cas où l'on ne prévoirait rien d'autre sous les panneaux, ou bien elles peuvent servir à canaliser l'eau qui aurait coulé accidentellement. Leur fonction peut être aussi de former sous les panneaux solaires une couche d'air isolant thermique.

Pour finir, comme on peut l'apprécier dans la figure 5, le système de l'invention prévoit des éléments auxiliaires pour compléter les composantes décrites, tels que des canaux latéraux [15] pour recueillir l'eau ou des couvercles [14] pour les extrémités des premiers profils.

## Revendications

1. Système modulaire de fixation de panneaux solaires [1] à un toit [2] pourvu de moyens pour canaliser l'eau qui comprend:
- des premiers profils [3] destinés à être disposés dans la direction de la pente maximale [L] du toit [2],
- et des seconds profils [4] perpendiculaires aux premiers et disposés au niveau de l'union de deux panneaux contigus dans la direction de la pente maximale du toit,
- ces premiers profils [3] comprenant à mi-hauteur et de chaque côté des languettes [3a] et [3b] d'appui de deux panneaux solaires [1] contigus dans la direction horizontale et deux canaux [3c] et [3d] disposés de manière à configurer deux sorties d'eau situées sous les languettes [3a] et [3b] mentionnées ci-dessus,
- les seconds profils [4] étant pourvus de canaux [4a] et [4b] pour conduire l'eau jusqu'aux sorties d'eau [3c] et [3d] et les bords de ces canaux des seconds profils [4] constituant les bords [4c] et [4d] d'appui des panneaux [1].
Ce système est **caractérisé par le fait que** les seconds profils [4] s'appuient sur les bords des sorties d'eau [3c] et [3d], font de butée contre les languettes [3a] et [3b] et comprennent une extension [4e] qui s'étend entre deux panneaux solaires [2] du fait que les bords des canaux [4a] et [4b] des seconds profils [4] se situent à la même hauteur que les languettes [3a] et [3b], de sorte que les seconds profils remplissent simultanément les fonctions de séparation entre les premiers profils, de positionnement relatif entre profils contigus et de canalisation de l'eau jusqu'aux sorties d'eau.

2. Système modulaire selon la revendication 1, dans lequel les premiers profils destinés à être disposés dans la direction de la pente maximale s'étendent, pour leur partie supérieure après montage, au moyen de deux languettes [5] substantiellement verticales quand le système est monté.

3. Système modulaire selon la revendication antérieure, qui comprend des troisièmes profils [6] destinés à être fixés aux deux languettes [5] au moyen d'un corps central pourvu de deux languettes substantiellement verticales [6a], et à presser les panneaux contre les deux languettes d'appui correspondantes [3a] et [3b] au moyen d'un patin de la médiane duquel partent les deux languettes [5].

4. Système modulaire selon n'importe laquelle des revendications antérieures, qui comprend des quatrièmes profils [7] disposés perpendiculairement au-dessous de premiers profils [3] et pourvus de moyens de moyens de fixation à des éléments structuraux de la toiture [2].

5. Système selon la revendication antérieure, qui comprend des moyens de fixation [8] des premiers profils aux quatrièmes profils [7].

6. Système selon la revendication antérieure, dans lequel les moyens de fixation [8] des premiers profils [3] aux quatrièmes profils [7] comprennent .
- des coulisses [3e] et [7e] disposées dans les premiers profils [3] et les quatrièmes profils [7] respectivement,
- des pièces d'union [9] pourvues de moyens [10] pour glisser dans les coulisses [3e] et [7e],
- des moyens de blocage [11] des pièces d'union [9] dans les coulisses [3e] et [7e].

7. Système selon la revendication antérieure, dans lequel la coulisse [7e] des quatrièmes profils [7] comprend un canal de glissement [7f] et deux bords de rétention [7g] qui configurent une rainure de glissement [7i] d'une largeur inférieure à la plus grande largeur de la coulisse [7e].

8. Système selon la revendication, dans lequel les moyens [10] pour glisser dans les coulisses [3e] et [7e] consistent en une languette de rétention [10a] de forme substantiellement complémentaire aux coulisses [3e] des premiers profils [3], en un élément de retention [10b] destiné à glisser dans les coulisses [7e] des quatrièmes profils [7], et en une vis [10c] d'union entre l'élément de rétention [10b] et la pièce d'union [9].

9. Système selon la revendication antérieure, dans lequel les moyens de blocage [11] des pièces d'union [9] dans les coulisses [3e] et [7e] sont constitués de la vis [10c].

10. Système selon n'importe laquelle des revendications antérieures, qui comprend des joints d'étanchéité longitudinaux disposés à proximité des bords des languettes [3a] et [3b] d'appui de deux panneaux solaires [1].

11. Système selon n'importe laquelle des revendications antérieures, qui comprend des joints d'étanchéité sur les bords des sorties d'eau [3c] et [3d] des premiers profils [3].

12. Système modulaire selon n'importe laquelle des revendications antérieures, dans lequel l'extension [4e] est constituée de deux languettes [4f] et [4g] substantiellement parallèles.

13. Système modulaire selon la revendication antérieure, qui comprend des cinquièmes profils [12] destinés à être fixés aux deux languettes [4f] et [4g] des seconds profils au moyen d'un corps central pourvu de deux languettes [12a] substantiellement verticales, et à presser contre les languettes [4f] et [4] d'appui au moyen d'un patin [12b] de la médiane duquel partent les deux languettes [12a].

14. Système modulaire selon la revendication antérieure, dans lequel le patin des cinquièmes profils [12] est plié, de sorte que la moitié du patin [12b] située en aval après montage constitue une ouverture pour la circulation d'air [C] entre l'espace situé sous les panneaux et l'extérieur.

15. Système modulaire selon les revendications 7 et 8, dans lequel les quatrièmes profils [7] comprennent au fond du canal [7f] des languettes longitudinales [7i] destinées à servir d'ancrage à l'extrémité de la vis d'union [10c].

16. Système modulaire selon n'importe laquelle des revendications antérieures, qui comprend des sixièmes profils [23] destinés à être fixés aux deux languettes des premiers profils situés dans les arêtes latérales droite et gauche de la toiture, ces sixièmes profils étant pourvus d'un corps central muni de deux languettes [13a] substantiellement verticales, et à presser aux panneaux extrêmes contre les languettes d'appui [3a] et [3b] au moyen d'un patin de la médiane duquel partent deux languettes [13a], ce patin comprenant une jupe [13b] qui s'étend du côté sans panneau, de manière à constituer la finition de l'extrémité inférieure ou supérieure de la couverture de panneaux solaires.

17. Système modulaire selon n'importe laquelle des revendications antérieures, dans lequel les coulisses [3e] des premiers profils [3] s'étendent au moyen des coulisses [3m] et [3n], qui permettent d'emboîter et de maintenir des extrémités complémentaires de toiles de couverture disposées sous les panneaux.
